(19) Europäisches Patentamt
European Patent Office
Office européen des brevets

(11) **EP 2 599 974 A1**

(12) **DEMANDE DE BREVET EUROPEEN**

(43) Date de publication:
**05.06.2013 Bulletin 2013/23**

(51) Int Cl.:
**F01N 9/00** *(2006.01)*      **F01N 11/00** *(2006.01)*

(21) Numéro de dépôt: **12193421.0**

(22) Date de dépôt: **20.11.2012**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**

(30) Priorité: **30.11.2011   FR 1161004**

(71) Demandeur: **PEUGEOT CITROËN AUTOMOBILES
SA**
**78140 Velizy-Villacoublay (FR)**

(72) Inventeurs:
• **Hayat, Olivier**
**78530 Buc (FR)**
• **Guerin, Stephane**
**92250 La Garenne Colombes (FR)**
• **Leroy, Jean-Baptiste**
**75007 Paris (FR)**
• **Cornette, Annabelle**
**78420 Carrieres sur Seine (FR)**

(54) **Procede d'estimation d'une masse de suies dans un filtre a particules**

(57)    L'invention concerne un procédé d'estimation d'une masse de suies dans un filtre à particules, utilisant une modélisation (6) de la combustion des suies dans le filtre, la modélisation (6) donnant une masse de suies (7) dans le filtre à un premier instant à partir d'une valeur d'entrée de masse de suies dans le filtre donnée par la modélisation à un second instant précédent le premier instant.

Selon l'invention, la modélisation de la combustion (6) est associée à une boucle fermée de correction (15) corrigeant la valeur de la masse de suies (7) obtenue par la modélisation (6) en fonction d'un écart de concentration en dioxygène en aval du filtre entre la concentration (17) mesurée par un capteur (3) et celle (14) déterminée par la modélisation (6).

Fig.2

**Description**

L'invention concerne un procédé d'estimation d'une masse de suies dans un filtre à particules de ce filtre.

Un tel procédé d'estimation utilise, dans l'art antérieur, une modélisation de la combustion des suies dans le filtre, cette modélisation donnant une masse de suies dans le filtre à un premier instant à partir de valeur d'entrées dont une valeur d'entrée de masse de suies dans le filtre à un second instant précédent le premier instant.

Ce type de modélisation est sensible à différentes variables dont la température des gaz d'échappement en entrée du filtre, la composition des gaz d'échappement en entrée du filtre (dont la concentration en dioxygène) et la masse de suies dans le filtre à l'initiation de la régénération.

Cette modélisation est du type en « boucle ouverte » et elle ne prend pas en considération ni la dérivation dans le temps des composants liés au filtre à particules, ni à la dispersion de production des véhicules automobiles comportant le filtre. En conséquence, il existe une certaine approximation de la masse de suies déterminée par la modélisation, et donc de la masse de suies en fin de régénération, ce qui se reporte sur l'estimation de la masse de suies dans le filtre pendant les phases de filtration et donc sur la décision prise par le contrôle moteur de lancer une régénération du filtre du fait de l'atteinte d'une masse de déclenchement.

L'invention vise à résoudre un ou plusieurs de ces inconvénients, et notamment à apporter une meilleure robustesse au système et une meilleure précision de l'estimation de la masse de suies.

L'invention porte ainsi sur un procédé d'estimation d'une masse de suies dans un filtre à particules, utilisant une modélisation de la combustion des suies dans le filtre, la modélisation donnant une masse de suies dans le filtre à un premier instant à partir d'une valeur d'entrée de masse de suies dans le filtre donnée par la modélisation à un second instant précédent le premier instant, **caractérisé en ce que** la modélisation de la combustion est associée à une boucle fermée de correction corrigeant la valeur de la masse de suies obtenue par la modélisation en fonction d'un écart de concentration en dioxygène en aval du filtre entre la concentration mesurée par un capteur et celle déterminée par la modélisation.

La combustion des suies dans le filtre à particule est directement lié à la différence entre la concentration de dioxygène en amont du filtre et celle en aval de ce dernier. De ce fait, la constatation d'un écart de concentration en dioxygène en aval du filtre entre la valeur donnée par la modélisation de la combustion et celle mesurée par un capteur est synonyme d'un écart dans la détermination de la masse de suies consommées à l'intérieur du filtre à particules.

Ainsi, le procédé d'estimation de masse de suies conforme à la présente invention permet d'apporter une meilleure précision à la masse de suies dans le filtre.

Selon un premier mode de réalisation particulier, la boucle fermée de correction modifie la valeur de la masse de suies de sorte que la valeur d'entrée de la masse de suies est égale à la masse de suies donnée par la modélisation au second instant à laquelle est ajoutée un écart correctif de masse de suies brûlées déterminé en fonction de l'écart de concentration en dioxygène.

Selon un second mode de réalisation particulier, l'écart correctif de masse de suies brûlées est obtenu à partir d'une intégration temporelle d'un écart instantané de masse de suies.

Selon un troisième mode de réalisation particulier, l'écart correctif de masse de suies brûlées est obtenu après correction, par un correcteur, de l'intégration temporelle de l'écart instantané de masse de suies.

Selon un quatrième mode de réalisation particulier, l'écart instantané de masse de suies est déterminé à partir de l'écart de concentration en dioxygène.

Selon un cinquième mode de réalisation particulier, la modélisation de la combustion des suies repose sur une équation d'Arrhénius de cinétique chimique.

D'autres caractéristiques et avantages de l'invention ressortiront clairement de la description qui en est faite ci-après, à titre indicatif et nullement limitatif, en référence aux dessins annexés, dans lesquels :

- la figure 1 illustre une ligne d'échappement comprenant un filtre à particules ;

- la figure 2 illustre schématiquement l'association de la modélisation de la combustion des suies dans le filtre à particules avec une boucle fermée de correction conforme à la présente invention; et

- la figure 3 illustre schématiquement le bouclage sur la concentration en dioxygène en aval du filtre.

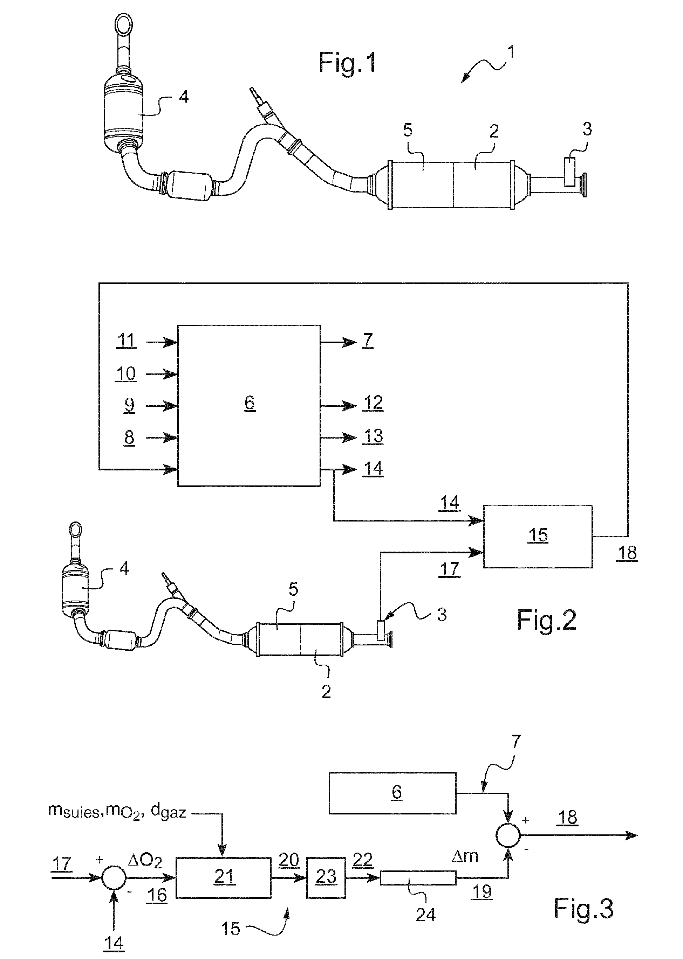

Comme illustré à la figure 1, un véhicule automobile comprend, en sortie d'un moteur à combustion (en l'occurrence, un moteur diesel), une ligne d'échappement 1 qui comporte un filtre à particules 2 et, en aval de ce dernier, un capteur 3 adapté à mesurer une quantité de dioxygène en sortie du filtre 2 (en l'occurrence, un capteur de mesure du taux d'oxydes d'azote). Dans le présente exemple, la ligne d'échappement 1 comprend, en amont du filtre 2, un dispositif catalytique d'oxydation 4 et un dispositif catalytique de réduction des oxydes d'azote 5 disposé en aval du dispositif catalytique d'oxydation 4.

Le filtre à particules 2 subit de façon successive et alternée des phases de capture lors desquelles il filtre les gaz d'échappement qui le traverse et capte les particules de suies, et des phases de régénération lors desquelles il est régénéré par la combustion des suies piégées. Dans le présent mode de réalisation, lors de la phase de régénération, la combustion des suies est causée par une élévation de température à l'intérieur du filtre 2 due à une combustion, dans le dispositif catalytique d'oxydation 4, de carburant envoyé en post-injection.

Du fait des inconvénients liés à la post-injection de carburant (sa consommation supplémentaire et sa dilution dans l'huile due à sa projection sur les parois du cylindre), les phases de régénération sont initiées au mieux, notamment en fonction de la quantité de suies piégées dans le filtre. Ainsi, le système de contrôle du moteur gère les phases subies par le filtre d'après la masse de suies contenues par ce dernier, celle-ci étant estimées, d'une part, par une modélisation de particules qui estime la quantité de suies piégées par le filtre lors des phases de capture, et, d'autre part, par une modélisation de combustion 6 qui estime la quantité de suies brûlées lors des phases de régénération.

La modélisation de combustion 6 est une modélisation en boucle ouverte qui donne une masse de suies 7 dans le filtre 2 à un premier instant t1, à partir d'une valeur d'entrée de masse de suies dans le filtre 2 donnée par la modélisation à un second instant t2 précédent le premier instant t1,

Dans le présente mode de réalisation, les valeurs d'entrée de la modélisation de combustion 6 comprennent également la température des gaz d'échappement 8 en amont du filtre 2, le débit des gaz d'échappement 9 et la composition des gaz d'échappement 10, 11 à l'entrée du filtre 2, notamment la composition en dioxygène 10. Les valeurs de sortie comprennent également la température des gaz d'échappement 12, 13 en amont 12 et en aval 13 du filtre 2 et la composition en dioxygène 14 des gaz d'échappement en sortie du filtre 2.

Plus précisément, dans le présent exemple, la modélisation de combustion 6 repose sur une équation d'Arrhénius de cinétique de la réaction de combustion des suies par le dioxygène. Selon cette modélisation, d'une part, la quantité de dioxygène consommé à l'intérieur du filtre 2 est directement liée à la vitesse de combustion des suies, et, d'autre part, en faisant converger la vitesse de combustion des suies vers la vitesse réelle, la masse de suies courante converge vers la masse réelle de suies.

Conformément à la présente invention, la modélisation de combustion 6 est associée à une boucle fermée de correction 15 qui corrige la valeur d'entrée de la masse de suies 7 obtenue par la modélisation de combustion 6 en fonction d'un écart de concentration en dioxygène $\Delta O_2$ 16 en aval du filtre 2 entre la concentration 17 mesurée par le capteur 3 et celle 14 déterminée par la modélisation de combustion 6. Cette valeur corrigée de la masse de suies 18 est celle utilisée comme valeur d'entrée de la modélisation de combustion 6.

Ainsi, le procédé d'estimation de la masse de suies dans le filtre 2 comprend une boucle fermée utilisant une mesure de la concentration de dioxygène en sortie du filtre 2, ce qui apporte une meilleure robustesse et précision de l'estimation de la masse de suies.

Comme illustré à la figure 3, la boucle fermée de correction 15 modifie la valeur de la masse de suies de sorte que la valeur d'entrée de la masse de suies 18 est égale à la masse de suies 14 donnée par la modélisation de combustion 6 à laquelle est ajoutée un écart correctif de masse de suies brûlées $\Delta$m 19 qui est déterminé en fonction de l'écart de concentration en dioxygène $\Delta O_2$ 16.

Dans le présent exemple, dans un premier temps un écart instantané de masse de suies $\delta$m 20 est déterminé à partir de l'écart de concentration en dioxygène $\Delta O_2$ 16 selon un modèle de combustion des suies 21, dans un second temps un écart correctif cumulé 22 est déterminé à partir d'une intégration temporelle de l'écart instantané 20 selon un intégrateur discret 23, et dans un troisième temps, l'écart correctif de masse de suies brûlées $\Delta$m 19 est déterminé par une correction de l'écart correctif cumulé 22 selon un correcteur 24.

De façon plus précise, le modèle de combustion des suies 21 utilise la formule suivante :

$$\delta m = \frac{m_{suies}}{m_{O_2}} \frac{d_{gaz}}{100} \Delta O_2$$

Où $m_{suies}$ est la masse de suies dans le filtre 2, $m_{O_2}$ est la masse de dioxygène consommé par la combustion des suies depuis l'initiation de la régénération, et $d_{gaz}$ est le débit massique des gaz d'échappement.

En apportant une meilleure précision dans la connaissance de la masse de suies dans le filtre à particules, la présente invention permet de limiter les inconvénients liés à l'utilisation de la post-injection pour réaliser la régénération. Par ailleurs, la mise en oeuvre de la présente invention est à moindre coût dans le cas où la ligne d'échappement 1 est équipée d'un capteur à oxydes d'azote qui permet une mesure de dioxygène.

**Revendications**

1. Procédé d'estimation d'une masse de suies dans un filtre à particules (2), utilisant une modélisation (6) de la combustion des suies dans le filtre (2), la modélisation (6) donnant une masse de suies (7) dans le filtre (2) à un premier instant (t1) à partir d'une valeur d'entrée de masse de suies dans le filtre (2) donnée par la modélisation (6) à un second instant (t2) précédent le premier instant (t1), **caractérisé en ce que** la modélisation de la combustion (6) est associée à une boucle fermée de correction (15) corrigeant la valeur de la masse de suies (7) obtenue par la modélisation (6) en fonction d'un écart de concentration en dioxygène (16) en aval du filtre (2) entre la concentration (17) mesurée par un capteur (3) et celle (14) déterminée par la modélisation (6).

2. Procédé d'estimation selon la revendication 1, **caractérisé en ce que** la boucle fermée de correction (15) modifie la valeur de la masse de suies (7) de sorte que la valeur d'entrée de la masse de suies (18) est égale à la masse de suies (7) donnée par la modélisation (6) au second instant (t2) à laquelle est ajoutée un écart correctif de masse de suies brûlées (19) déterminé en fonction de l'écart de concentration en dioxygène (16).

3. Procédé d'estimation selon la revendication 2, **caractérisé en ce que** l'écart correctif de masse de suies brûlées (19) est obtenu à partir d'une intégration temporelle (23) d'un écart instantané de masse de suies (20).

4. Procédé d'estimation selon la revendication 3, **caractérisé en ce que** l'écart correctif de masse de suies brûlées (19) est obtenue après correction, par un correcteur (24), de l'intégration temporelle (23) de l'écart instantané de masse de suies (20).

5. Procédé d'estimation selon l'une des revendications 3 et 4, **caractérisé en ce que** l'écart instantané de masse de suies (20) est déterminé à partir de l'écart de concentration en dioxygène (16).

6. Procédé d'estimation selon l'une des revendications 1 à 5, **caractérisé en ce que** la modélisation (6) de la combustion des suies repose sur une équation d'Arrhénius de cinétique chimique.

Fig.1

Fig.2

$m_{suies}, mO_2, d_{gaz}$

$\Delta O_2$

$\Delta m$

Fig.3

Europäisches
Patentamt

European
Patent Office

Office européen
des brevets

# RAPPORT DE RECHERCHE EUROPEENNE

Numéro de la demande

EP 12 19 3421

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | GB 2 479 122 A (GM GLOBAL TECH OPERATIONS INC [US]) 5 octobre 2011 (2011-10-05) * abrégé; figure 1 * ----- | 1-6 | INV. F01N9/00 F01N11/00 |
| A | US 2011/219746 A1 (YEZERETS ALEKSEY [US] ET AL) 15 septembre 2011 (2011-09-15) * abrégé; figures 1,3,4 * ----- | 1-6 | |
| A | FR 2 949 816 A1 (PEUGEOT CITROEN AUTOMOBILES SA [FR]) 11 mars 2011 (2011-03-11) * abrégé; figures * ----- | 1-6 | |

| DOMAINES TECHNIQUES RECHERCHES (IPC) |
|---|
| F01N |

Le présent rapport a été établi pour toutes les revendications

| Lieu de la recherche | Date d'achèvement de la recherche | Examinateur |
|---|---|---|
| Munich | 27 mars 2013 | Blanc, Sébastien |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 12 19 3421

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-03-2013

| Document brevet cité au rapport de recherche | | Date de publication | Membre(s) de la famille de brevet(s) | Date de publication |
|---|---|---|---|---|
| GB 2479122 | A | 05-10-2011 | AUCUN | |
| US 2011219746 | A1 | 15-09-2011 | AUCUN | |
| FR 2949816 | A1 | 11-03-2011 | AUCUN | |

EPO FORM P0460

Pour tout renseignement concernant cette annexe : voir Journal Officiel de l'Office européen des brevets, No.12/82